# EUROPÄISCHE PATENTSCHRIFT

(11) **EP 1 544 517 B1**
(45) Veröffentlichungstag und Bekanntmachung des Hinweises auf die Patenterteilung: **28.06.2006**
(21) Anmeldenummer: 04026774.2
(22) Anmeldetag: 11.11.2004
(51) Int. Cl.: F16H 63/32

(54) **Schaltgabel**
Shift fork
Fourchette de boîte de vitesses

(30) Priorität: 20.12.2003 DE 10360268
(43) Veröffentlichungstag der Anmeldung: 22.06.2005
(73) Patentinhaber: Schaeffler KG, 91074 Herzogenaurach (DE)
(72) Erfinder: Grieshammer, Andreas, 90429 Nürnberg (DE); Pogrebnyak, Dmytro, 90409 Nürnberg (DE)

(56) Entgegenhaltungen:
- DE-A- 10 018 850
- DE-A- 10 125 098
- PATENT ABSTRACTS OF JAPAN Bd. 0070, Nr. 10 (P-168), 14. Januar 1983 (1983-01-14) & JP 57 166621 A (NISSAN JIDOSHA KK), 14. Oktober 1982 (1982-10-14)

## Beschreibung

### Gebiet der Erfindung

Die Erfindung betrifft eine Schaltgabel für ein Wechselgetriebe mit einem Grundkörper, wobei der Grundkörper auf Grund seiner im Wesentlichen U-förmigen Ausgestaltung eine Schiebemuffe zumindest teilweise umgreift und wobei der Grundkörper aus einem Profilkörper hergestellt ist, entsprechend dem Oberbegriff des Anspruchs 1.

In manuellen oder automatisierten Getrieben ist zwischen zwei Gangrädern, die drehbar auf einer Getriebewelle gelagert sind, ein Synchronkörper und eine Schiebemuffe angeordnet. Die Schiebemuffe ist mit einer Innenverzahnung versehen, die in eine in den Synchronkörper eingebrachte Außenverzahnung eingreift. Der Synchronkörper ist drehfest mit der Getriebewelle verbunden. Beim Schalten eines Ganges wird die Schiebemuffe in axialer Richtung auf eines der Gangräder zu verschoben, bis ihre Innenverzahnung in eine am Gangrad angebrachte Kupplungsverzahnung eingreift. Die Innenverzahnung der Schiebemuffe steht dann sowohl mit der Kupplungsverzahnung als auch mit der Außenverzahnung des Synchronkörpers in Eingriff. Die Schaltgabel hat die Aufgabe die axiale Bewegung von einem Schaltgestänge auf die Schiebemuffe zu übertragen. Dazu ist die Schaltgabel entweder axial verschiebbar auf einem Trägerelement, wie beispielsweise einer Schaltschiene, Schaltwelle bzw. Schaltstange, gelagert oder mit diesem fest verbunden. Ein gabelförmiger Grundkörper umgreift die Schiebemuffe in Umfangsrichtung zumindest teilweise und ist an den Enden mit Mitnehmerelementen versehen. Die Mitnehmerelemente der Schaltgabel wirken mit korrespondierenden Mitnehmerelementen an der Schiebemuffe zusammen, worüber eine Verschiebung der Schaltgabel auf die Schiebemuffe übertragen wird.

Eine derartige Schaltgabel ist aus der gattungsgemässen DE 101 25 098 bekannt. Diese Schaltgabel besteht aus einem durch ein Umformverfahren aus Stahlblech hergestellten gabelförmigen Grundkörper. Der Grundkörper ist bogenförmig ausgeführt und läuft in zwei Gabelenden aus. Die Gabelenden schließen ein Schaltmaul der Schaltgabel zwischen sich ein. Der Grundkörper ist aus einem im Längsschnitt U-förmigen Profil ausgebildet. An der Schaltgabel ist zur Versteifung der räumlichen Struktur ein separat gefertigtes Formteil aus Blech angebracht, wobei die Verbindung durch Schweißen hergestellt wird. An das Formteil schließt sich ein Führungsauge an, mit welchem die Schaltgabel an einer Schaltwelle axial verschiebbar gelagert ist. Weiterhin ist am Formteil bzw. an dem Führungsauge ein Schaltarm durch eine Schweißverbindung angebracht.

Eine weitere Schaltgabel ist in JP 57-166 621 beschrieben. Diese Schaltgabel ist ebenfalls aus Blech gefertigt und besteht aus einem Grundkörper der U-förmig ausgebildet ist und somit ein Schaltmaul definiert. Der Grundkörper ist als Profilkörper ausgebildet. Ferner schließt sich im Bereich des Schaltmauls ein Steg an das Profil an, der in eine Führungsnut einer Schiebemuffe eingreift. Das Verfahren zur Herstellung dieses Typs von Schaltgabel sieht vor, ein im Ausgangszustand flaches Blechteil derart zu biegen, dass das Profil eine Fläche einschließt, die offenen Seiten des Blechteils im Bereich des Schaltmauls aufeinander liegen und einen radial nach innen weisenden Steg bilden. Das geschlossene Profil, dessen Enden in den nach innen weisenden Steg auslaufen, erhöht die Steifigkeit der Schaltgabel und kann rechteckig oder kreisförmig ausgeführt sein. Diese Lösung weist, neben der komplizierten und kostenintensiven Produktion, eine zu geringe Steifigkeit auf, wodurch die Lebensdauer der Schaltgabel bei hohen Schaltkräften verkürzt wird. Weiterhin sind bei dieser Lösung kostenintensive Nachbearbeitungsschritte im Bereich des Steges nötig.

### Zusammenfassung der Erfindung

Der Erfindung liegt daher die Aufgabe zugrunde diese geschilderten Nachteile zu vermeiden und somit eine kostengünstig zu produzierende Schaltgabel in Leichtbauweise zu schaffen, die hohen Torsions- und Widerstandsmomenten standhalten kann. Weiterhin wird ein Verfahren zu deren Herstellung vorgeschlagen.

Erfindungsgemäß wird diese Aufgabe dadurch gelöst, dass die Profilkörper als in sich geschlossene Rohrprofile ausgeführt sind. Weiterhin geht der U-förmige Grundkörper an seinen Enden in Mitnehmer über, die ebenfalls als Profilkörper in Form eines in sich geschlossenen Rohrprofils ausgebildet sind. Vorteilhafterweise ist der Profilkörper im Wesentlichen rechteckig ausgeführt.

Die Ausbildung des Grundkörpers als Profilkörper in Form eines in sich geschlossenen Rohrprofils erhöht das maximal aufnehmbare Widerstandsmoment im Vergleich zu L- oder U-förmig ausgeführten Profilen bei gleichen Abmessungen und gleicher Wandstärke des Blechteils um bis zu einen Faktor 10. Bei der Berechnung der Torsionsmomente ergibt sich sogar ein Faktor von 30. Durch die Ausbildung der Mitnehmer als beliebig formbare Profilkörper ist ein direkter Eingriff der Mitnehmer in die ringförmig ausgebildete, an der Außenfläche der Schiebemuffe umlaufende Führungsnut ohne den Umweg eines am Schaltmaul angebrachten Steges möglich. Durch den direkten Eingriff wirken keine zusätzlichen Hebelkräfte auf den Profilkörper, wodurch dessen Lebensdauer nicht negativ beeinflusst wird.

Im Vergleich zu massiven Ausführungsformen einer Schaltgabel wird durch die Ausführungsform als Profilkörper das Gewicht des Bauteils erheblich reduziert. Neben der bevorzugten rechteckigen Ausführung der Profile ist jede Querschnittsform denkbar, wie beispielsweise runde, drei- oder mehreckige oder auch komplexere Strukturen.

In einer Weiterführung der Erfindung ist die Schaltgabel mit einer Führungshülse verbunden. Weiterhin ist es möglich zwischen der Führungshülse und der Schaltgabel ein Formteil anzubringen. Zur Bedienung der Schaltgabel ist an der Schaltgabel selbst, an der Führungshülse oder am Formteil ein Schaltarm angebracht. Die Schaltgabel, die Führungshülse, das Formteil und der Schaltarm können mit Hilfe von Schweißverbindungen aneinander befestigt werden.
Mit Hilfe der Führungshülse kann die Schaltgabel auf einer Schaltwelle bzw. Schaltstange axial verschiebbar und gegebenenfalls drehbar gelagert werden. Weiterhin ist es möglich den Grundkörper, beispielsweise über Schweiß- oder Klebverbindungen, direkt mit einer Schaltschiene zu verbinden. Ein zusätzliches Formteil, welches sich von der Führungshülse zur Schaltgabel erstreckt und den Grundkörper der Schaltgabel teilweise umgreift kann die Steifigkeit der Schaltgabel nochmals erhöht werden. In die Führungshülse kann sowohl ein Gleitlager als auch als Wälzlager eingebracht sein. Die Schaltwelle bzw. Schaltstange ist über dieses Lager in der Führungshülse gelagert, wodurch die Reibung bei axialen Verschiebungen der Schaltgabel minimiert und damit der Schaltkomfort erhöht wird. Als Wälzlager wären Linearwälzlager oder Radial-Linearwälzlager denkbar.

Weiterhin ist vorgesehen, dass die Teile der Mitnehmer, die in die Führungsnut der Schiebemuffe eingreifen, mit einer Gleitbeschichtung versehen sind.
Die Gleitbeschichtung kann durch einen aus Kunststoff ausgeführten Überzug realisiert sein. Dabei sind die Kunststoffschichten auf die Mitnehmer, beispielsweise in einem Spritzgußverfahren, aufgespritzt. Alternativ ist eine Metallschicht denkbar, wobei der Werkstoff so zu wählen ist, dass der Kontakt zwischen Führungsnut der Schiebemuffe und der Gleitschicht einen möglichst geringen Reibungskoeffizienten aufweist. Beispielsweise kann eine CoMoSi-, Nickel-Graphit-, Molybdän-, Bronze- oder Messingschicht aufgebracht sein. Die Schichten können in einem Plattier- oder Spritzverfahren aufgebracht werden. Beispielhaft werden hierzu Flamm-, Lichtbogen- oder Plasmaspritzverfahren und Schweiß- oder Walzplattieren genannt.

In einer weiteren Ausführungsform ist am Grundkörper eine Stützlasche angebracht, die in die Führungsnut der Schiebemuffe eingreift. Die Stützlasche kann aus einem Material bestehen, welches im Zusammenwirken mit dem Material der Wandung der Führungsnut der Schiebemuffe, mit dem die Stützlasche in Reibkontakt steht, einen niedrigen Reibungskoeffizienten aufweist. Weiterhin ist denkbar, dass die Stützlasche aus Blech besteht und mit einem Gleitbelag versehen ist. Durch das Anbringen einer Stützlasche wird neben den zwei Verbindungsstellen zwischen Schaltgabel und Schiebemuffe an den Mitnehmern eine dritte Verbindungsstelle eingeführt, wodurch die Belastung der Schaltgabel verringert wird. Der Einsatz von Gleitbelägen verringert wiederum die Reibung, was zu einer verlängerten Lebensdauer bzw. geringerem Kraftstoffverbrauch führt.

In einer Vorteilhaften Ausführung der Erfindung wird vorgeschlagen, dass der Schaltarm und das Formteil in je einem spanlosen Umformprozeß aus je einem Blechteil gefertigt sind. Die Ausführung der einzelnen Komponenten als spanlos hergestellte Umformteile aus Blech führt neben der Gewichtsreduzierung der Schaltgabel im Vergleich zu massiven Ausführungen auch zu einer einfacheren und kostengünstigeren Herstellung in der Massenproduktion.

Weiterhin wird ein Verfahren zur Herstellung einer erfindungsgemäßen Schaltgabel für ein Wechselgetriebe angegeben, in dem ein Rohr als Ausgangsmaterial verwendet wird, mit folgenden Schritten:
- Füllen des Hohlraums des Rohres mit einem inkompressiblen Medium,
- Aufweiten und Umformen der Rohrprofile,
- Umbiegen des mit den gewünschten Profilen versehenen Rohres zu der Schaltgabel und
- Entleeren des Hohlraums.

Dabei wird vorgeschlagen, dass das inkompressible Medium Paraffin oder Öl ist.
Das im Ausgangszustand an beiden Enden offene Rohr wird in einem ersten Schritt mit einem inkompressiblen Medium gefüllt. In einem anschließenden Arbeitsgang werden die Profile des Grundkörpers und der Mitnehmer geformt. Dabei kann das Rohr mittels Hochdruckformen zumindest partiell aufgeweitet werden. Weiterhin können die Profile der Rohrenden und des mittleren Bereichs des Rohres durch Walzen bzw. Rollieren ausgeformt werden. Auf diese Weise ist es möglich verschiedene Profildicken bzw. Profilarten an verschiedenen Stellen der Schaltgabel zu realisieren.

### Kurze Beschreibung der Zeichnungen

Weitere Merkmale der Erfindung ergeben sich aus der nachfolgenden Beschreibung und aus den Zeichnungen, in der ein Ausführungsbeispiel der Erfindung vereinfacht dargestellt ist. Es zeigen:
- Figur 1: einen Längsschnitt einer Schiebemuffe mit Führungsnut, in die eine Schaltgabel eingreift,
- Figur2: eine Frontansicht einer erfindungsgemäßen Schaltgabel,
- Figur 3: eine Schnittdarstellung einer erfindungsgemäßen Schaltgabel entlang der Linie III-III aus Figur 2,
- Figur 4: eine Schnittdarstellung einer erfindungsgemäßen Schaltgabel entlang der Linie IV-IV aus Figur 2,
- Figur 5: eine perspektivische Ansicht einer erfindungsgemäßen Schaltgabel nach Figur 2 mit Formteil, Führungshülse und Schaltarm und
- Figuren 6 bis 9: ein Verfahren zur Herstellung einer erfindungsgemäßen Schaltgabel.

### Ausführliche Beschreibung der Zeichnungen

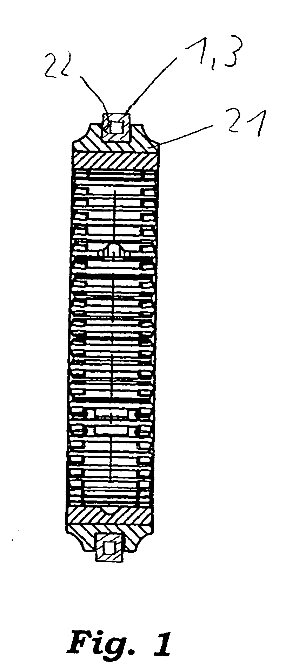

Figur 1 zeigt einen Längsschnitt durch eine Schiebemuffe 21. Die Schiebemuffe 21 ist mit einer Führungsnut 22 versehen, in die Mitnehmer 3 einer erfindungsgemäßen Schaltgabel 1 eingreifen.

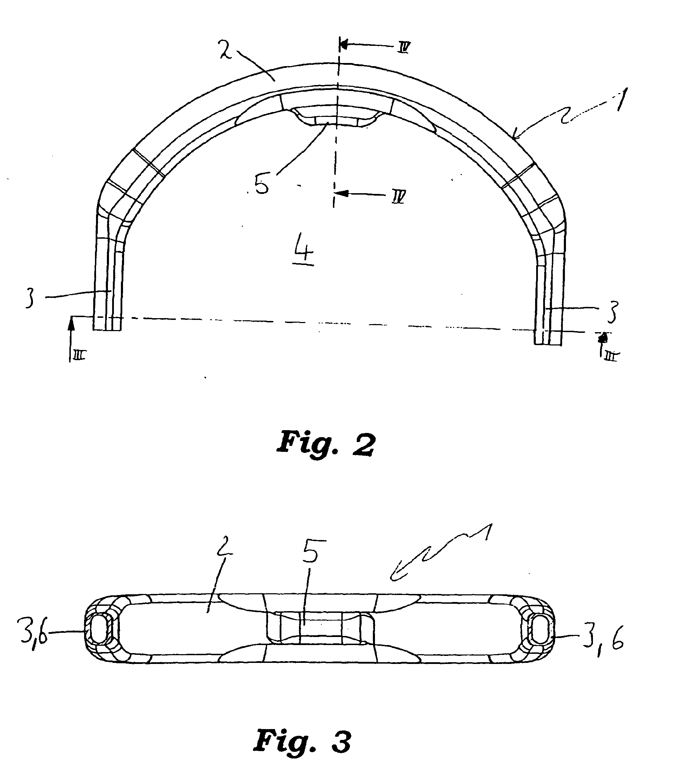

In Figur 2 ist eine erfindungsgemäße Schaltgabel 1 in Frontansicht dargestellt. Diese besteht aus einem Grundkörper 2, der in zwei mit diesem einteilig ausgeführte Mitnehmer 3 übergeht. Die Mitnehmer 3 und der Grundkörper 2 bilden ein Schaltmaul 4, wobei die Mitnehmer 3 in eine nicht dargestellte Führungsnut einer ebenfalls nicht dargestellten Schiebemuffe einer Schaltkupplung eingreifen.
In der dargestellten Ausführungsform ist die Schaltgabel 1 am Grundkörper 2 mit einer Stützlasche 5 versehen, die in das Schaltmaul 4 hineinragt. Die Stützlasche 5 kann einteilig mit dem Grundkörper 2 oder als separates Teil ausgeführt sein, welches nachträglich am Grundkörper 2 angebracht wird. Die Stützlasche 5 greift ebenfalls in die Führungsnut einer nicht dargestellten Schiebemuffe ein, wodurch die Schiebemuffe bei axialer Verschiebung der Schaltgabel 1 nun an drei Stellen mit einer Kraft beaufschlagt wird, was sich positiv auf die Torsions- und Widerstandsmomente auswirkt. Sowohl die Stützlasche 5 als auch die Mitnehmer 3 sind in den Bereichen, in denen sie in die Führungsnut der Schiebemuffe eingreifen mit Gleitschicht versehen. Diese Schicht kann entweder eine Kunststoffschicht oder eine geeignete Metall- oder Metallegierungsschicht sein.

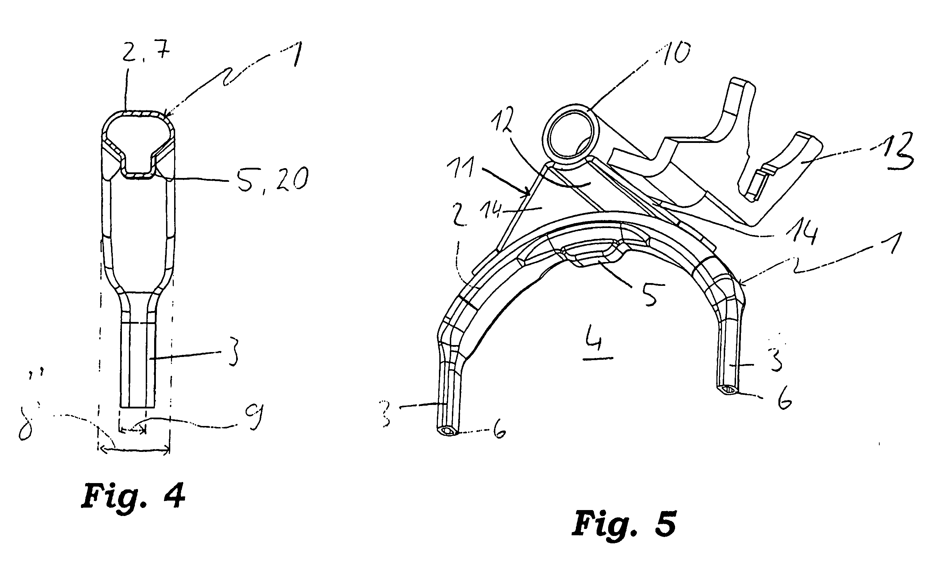

In den Figuren 3 und 4 sind Schnittdarstellungen durch die Mitnehmer 3 bzw. den Grundkörper 2 der Schaltgabel 1 dargestellt. In diesen Darstellungen sind deutlich die geschlossenen Rohrprofile der Mitnehmer 3 bzw. des Grundkörpers 2 zu erkennen. Die Rohrprofile sind in sich geschlossen und ohne Verbindungsstellen ausgeführt. Das Profil 6 der Mitnehmer 3 ist im Wesentlichen rechteckig und ohne Unterbrechungen bzw. Verbindungsstellen ausgeführt, wodurch eine signifikante Erhöhung der Steifigkeit gegenüber L- bzw. U-förmigen Profilen erreicht wird. Legt man gleiche Abmessungen der Profile und gleiche Blechstärken zugrunde führt die Ausführung der Profile als geschlossenes, rechteckiges, eine Fläche ohne Unterbrechungen bzw. Verbindungsstellen vollständig umfassendes Rohrprofil dazu, dass die Schaltgabel bis zu einem Faktor 10 höhere Widerstandsmoment aufnehmen kann. Das Torsionsmoment kann sogar um bis zu einen Faktor 30 höher liegen als bei den offenen Profilen.

In Figur 4 ist ein Längsschnitt durch die Schaltgabel 1 im Bereich der Stützlasche 5 dargestellt. Das im wesentlichen rechteckige Grundkörperprofil 7 ist an dieser Stelle um ein in das Schaltmaul 4 eingreifendes Stützlaschenprofil 20 erweitert. Deutlich zu erkennen ist auch, dass der Querschnitt 8 des Grundkörpers 2 größer ist als der Querschnitt 9 der Mitnehmer 3, deren laterale Abmessungen denen der Führungsnut der Schiebemuffe angepasst sind. Durch die Vergrößerung des Querschnitts 8 des Grundkörpers 2 im Vergleich zum Querschnitt 9 der Mitnehmer 3 wird eine weitere Versteifung des Systems erreicht.

In Figur 5 ist eine erfindungsgemäße Schaltgabel 1 dargestellt, die mit einer Führungshülse 10 verbunden ist. In die Führungshülse 10 kann ein Gleitlager oder Wälzlagerhülse eingebracht sein, worüber sie Schaltgabel 1 auf einer nicht dargestellten Schaltstange oder Schaltwelle axial verschiebbar und gegebenenfalls drehbar gelagert ist. Ebenfalls möglich ist eine direkte Verbindung mit einer Schaltschiene, beispielsweise mittels einer Schweiß- oder Klebverbindung. Zwischen Führungshülse 10 und Schaltgabel 1 ist in der dargestellten Ausführungsform ein Formteil 11 angebracht. Das Formteil 11 ist in einem spanlosen Umformungsprozeß aus einem Blechteil hergestellt und ist über Kleb- oder Schweißverbindungen am Grundkörper 2 der Schaltgabel 1 und an der Führungshülse 10 befestigt. An der Führungshülse 10 ist ein Schaltarm 13 angebracht, in den ein nicht dargestellter Schaltfinger eingreift, der die axiale Bewegung von einem Schaltgestänge auf die Schaltgabel 1 überträgt. Ebenso wie das Formteil kann der Schaltarm in einem spanlosen Umformungsprozeß aus einem Blechteil hergestellt sein.

Die dargestellte Ausführungsform stellt nur eine denkbare Variante einer erfindungsgemäßen Schaltgabel 1 dar. Denkbar wäre auch eine zweiteilig ausgeführte Führungshülse 10, wobei der untere Teil der Führungshülse 10 durch die Aufnahme 12 des Formteils 11 gebildet und der obere Teil der Hülse separat gefertigt wird. Als Verbindungsmöglichkeiten stehen beispielsweise Schweiß- oder Klebverbindungen zur Verfügung. Denkbar ist auch ein Formteil 11, dessen beide Verbindungsarme 14 parallel Richtung Schaltgabel 1 verlaufen und die Schaltgabel 1 an der vom Schaltmaul 4 abgewandten Seite zumindest teilweise umgreifen, wodurch die Steifigkeit des Systems weiter erhöht wird. Der Schaltarm 13 kann wahlweise an der Führungshülse 10 am Formteil 11 oder direkt an der Schaltgabel 1 angebracht werden.

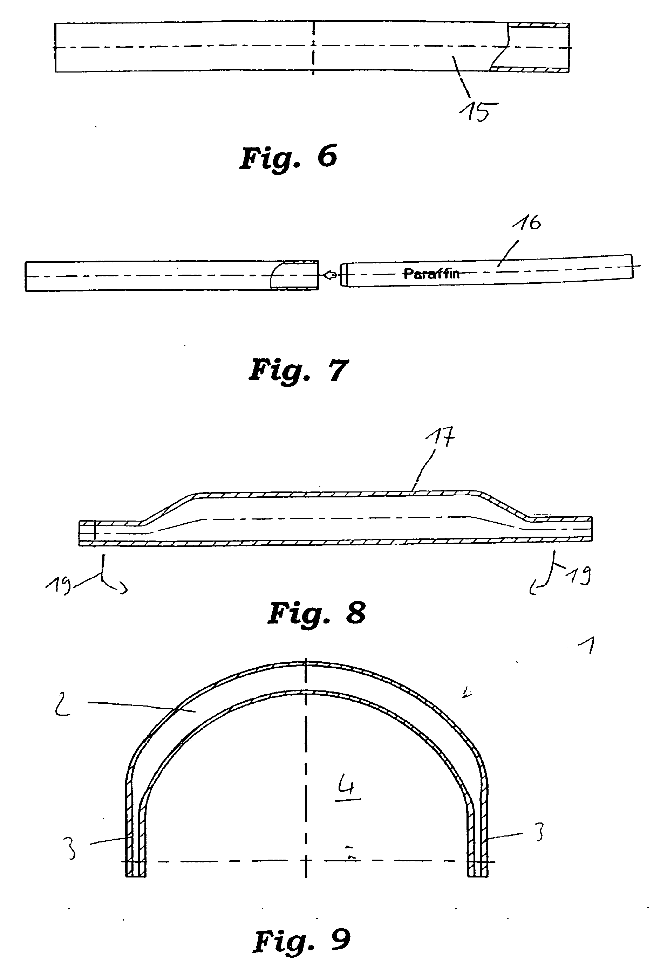

Die Figuren 6 bis 9 zeigen ein Verfahren zur Herstellung einer erfindungsgemäßen Schaltgabel 1. In Figur 6 ist im Teillängsschnitt als Ausgangsmaterial der Schaltgabel 1 ein Rohr 15 dargestellt. In einem ersten Verfahrensschritt wird das Rohr 15 mit einem inkompressiblen Medium 16 gefüllt (Figur 7). Dabei entspricht der Durchmesser des Rohres höchstens dem Durchmesser des kleinsten einzuformenden Profils. Als inkompressibles Medium 16 eigenen sich beispielsweise Paraffin oder Öle.

Figur 8 stellt den Rohling nach einem weiteren Bearbeitungsschritt dar, in dem die Grundform und die verschiedenen Profile in die Schaltgabel 1 eingebracht wurden. Mit Hilfe der Technik des Hochdruckformens kann das Rohr 15 abschnittsweise aufgeweitet werden. Dazu wird das Rohr 15 in eine Form eingespannt, die als Negativform ausgelegt ist. Die Negativform enthält alle Elemente, mit der die Schaltgabel versehen sein soll, beispielsweise die Stützlasche 5. Das sich in der Negativform befindende Rohr 15 wird an einem Ende verschlossen, wahrend das inkompressible Medium am vom anderen, offenen Ende aus mit Druck beaufschlagt wird. Dadurch dehnt sich das Rohr in die Hohlräume der Form aus und nimmt die vorgegebene Form an.

In einem weiteren Verfahrensschritt werden das Grundkörperprofil 7 bzw. die Profile 6 der Mitnehmer 3 in den mittleren Bereich 17 bzw. die Rohrenden 18 eingebracht. Dies kann durch Walzen oder Rollieren erfolgen.
Anschließend werden die Rohrenden 18 entlang der Pfeile 19 gebogen, wodurch die Schaltgabel 1 ihre endgültige Form annimmt.
In einem letzten Verfahrensschritt wird das inkompressible Medium 16 aus dem Hohlraum der Schaltgabel 1 entfernt.

### Bezugszahlenliste

- 1: Schaltgabel
- 2: Grundkörper
- 3: Mitnehmer
- 4: Schaltmaul
- 5: Stützlasche
- 6: Profil
- 7: Grundkörperprofil
- 8: Querschnitt
- 9: Querschnitt
- 10: Führungshülse
- 11: Formteil
- 12: Aufnahme
- 13: Schaltarm
- 14: Verbindungsarm
- 15: Rohr
- 16: inkompressibles Medium
- 17: mittlerer Bereich
- 18: Rohrenden
- 19: Pfeil
- 20: Stützlaschenprofil
- 21: Schiebemuffe
- 22: Führungsnut

## Patentansprüche

1. Schaltgabel (1) für ein Wechselgetriebe mit einem Grundkörper (2), wobei der Grundkörper (2) auf Grund seiner im Wesentlichen U-förmigen Ausgestaltung eine Schiebemuffe zumindest teilweise umgreift und wobei der Grundkörper (2) aus einem Profilkörper hergestellt ist, **dadurch gekennzeichnet, dass** der Profilkörper als in sich geschlossenes Rohrprofil ausgeführt ist.

2. Schaltgabel (1) nach Anspruch 1, **dadurch gekennzeichnet, dass** der U-förmige Grundkörper (2) an seinen Enden in Mitnehmer (3) übergeht.

3. Schaltgabel (1) nach Anspruch 2, **dadurch gekennzeichnet, dass** die Mitnehmer (3) als Profilkörper in Form eines in sich geschlossenen Rohrprofils ausgebildet sind.

4. Schaltgabel (1) nach einem der Ansprüche 1 bis 3, **dadurch gekennzeichnet, dass** die Profile im Wesentlichen rechteckig ausgeführt sind.

5. Schaltgabel (1) nach einem der Ansprüche 1 bis 4, **dadurch gekennzeichnet, dass** die Schaltgabel (1) mit einer Führungshülse (10) verbunden ist.

6. Schaltgabel (1) nach Anspruch 5, **dadurch gekennzeichnet, dass** zwischen der Führungshülse (10) und der Schaltgabel (1) ein Formteil (11) angebracht ist.

7. Schaltgabel (1) nach Anspruch 1, **dadurch gekennzeichnet, dass** an der Schaltgabel (1) ein Schaltarm (13) angebracht ist.

8. Schaltgabel (1) nach Anspruch 5, **dadurch gekennzeichnet, dass** an der Führungshülse 10 ein Schaltarm (13) angebracht ist.

9. Schaltgabel (1) nach Anspruch 6, **dadurch gekennzeichnet, dass** an dem Formteil (11) ein Schaltarm (13) angebracht ist.

10. Schaltgabel (1) nach Anspruch 5, **dadurch gekennzeichnet, dass** in die Führungshülse (10) ein Gleitlager eingebracht ist.

11. Schaltgabel (1) nach Anspruch 5, **dadurch gekennzeichnet, dass** in die Führungshülse (10) ein Wälzlager eingebracht ist.

12. Schaltgabel (1) nach einem der Ansprüche 2 oder 3, **dadurch gekennzeichnet, dass** die Teile der Mitnehmer (3), die in eine Führungsnut (22) der Schiebemuffe (21) eingreifen, mit einer Gleitbeschichtung versehen sind.

13. Schaltgabel (1) nach Anspruch 1, **dadurch gekennzeichnet, dass** am Grundkörper (2) eine Stützlasche (5) angebracht ist, die in die Führungsnut (22) der Schiebemuffe (21) eingreift.

14. Schaltgabel (1) nach Anspruch 13, **dadurch gekennzeichnet, dass** die Stützlasche (5) aus Blech besteht und mit einem Gleitbelag versehen ist.

15. Schaltgabel (1) nach Anspruch 13, **dadurch gekennzeichnet, dass** die Stützlasche (5) aus einem Material besteht, welches im Zusammenwirken mit dem Material der Wandung der Führungsnut (22) der Schiebemuffe (21), mit dem die Stützlasche (5) in Reibkontakt steht, einen niedrigen Reibungskoeffizienten aufweist.

16. Schaltgabel (1) nach einem der Ansprüche 7 bis 9, **dadurch gekennzeichnet, dass** der Schaltarm in einem spanlosen Umformprozeß aus einem Blechteil gefertigt ist.

17. Schaltgabel (1) nach Anspruch 6, **dadurch gekennzeichnet, dass** das Formteil in einem spanlosen Umformprozeß aus einem Blechteil gefertigt ist.

18. Verfahren zur Herstellung einer Schaltgabel (1) für ein Wechselgetriebe nach einem der Ansprüche 1 bis 17 aus einem Rohr (15) als Ausgangsmaterial, mit folgenden Schritten
- Füllen eines Hohlraum des Rohres (15) mit einem inkompressiblen Medium (16),
- Aufweiten und Umformen der Rohrprofile,
- Umbiegen des mit den gewünschten Profilen versehenen Rohres (15) zu der Schaltgabel (1) und
- Entleeren des Hohlraumes.

19. Verfahren nach Anspruch 18, **dadurch gekennzeichnet, dass** das inkompressible Medium (16) Paraffin ist.

20. Verfahren nach Anspruch 18, **dadurch gekennzeichnet, dass** das inkompressible Medium (16) Öl ist.

21. Verfahren nach Anspruch 18, **dadurch gekennzeichnet dass** das Rohr (15) mittels Hochdruckumformen zumindest partiell aufgeweitet wird.

22. Verfahren nach Anspruch 18, **dadurch gekennzeichnet dass** die Profile der Rohrenden (18) und des mittleren Bereichs des Rohres (15) durch Walzen bzw. Rollieren ausgeformt werden.

## Claims

1. Gearshift fork (1) for a mechanical transmission, said gearshift fork (1) comprising a base body (2), which base body (2), due to its substantially U-shaped configuration surrounds a sliding sleeve at least partially, and which base body (2) is made out of a profiled body, **characterised in that** the profiled body is configured as a self-contained, continuous tubular profile.

2. Gearshift fork (1) according to claim 1, **characterised in that** the shaped base body (2) merges at its end into entraining sections (3).

3. Gearshift fork (1) according to claim 2, **characterised in that** the entraining portions (3) are configured as profiled bodies in the form of a self-contained, continuous tubular profile.

4. Gearshift fork (1) according to one of claims 1 to 3, **characterised in that** the profiles are substantially rectangular in shape.

5. Gearshift fork (1) according to one of claims 1 to 4, **characterised in that** the gearshift fork (1) is connected to a guide sleeve (10).

6. Gearshift fork (1) according to claim 5, **characterised in that** a shaped part (11) is attached between the guide sleeve (10) and the gearshift fork (1).

7. Gearshift fork (1) according to claim 1, **characterised in that** a gearshift arm (13) is attached to the gearshift fork (1).

8. Gearshift fork (1) according to claim 5, **characterised in that** a gearshift arm (13) is attached to the guide sleeve (10).

9. Gearshift fork (1) according to claim 6, **characterised in that** a gearshift arm (13) is attached to the shaped part (11).

10. Gearshift fork (1) according to claim 5, **characterised in that** a sliding bearing is inserted into the guide sleeve (10).

11. Gearshift fork (1) according to claim 5, **characterised in that** a rolling bearing is inserted into the guide sleeve (10).

12. Gearshift fork (1) according to one of claims 2 or 3, **characterised in that** the parts of the entraining sections (3) that engage into a guide groove (22) of the sliding sleeve (21) are provided with a sliding coating.

13. Gearshift fork (1) according to claim 1, **characterised in that** a support tab (5) that engages into the guide groove (22) of the sliding sleeve (21) is attached to the base body (2).

14. Gearshift fork (1) according to claim 13, **characterised in that** the support tab (5) is made of sheet metal and is provided with a sliding lining.

15. Gearshift fork (1) according to claim 13, **characterised in that** the support tab (5) is made of a material that has a low coefficient of friction when cooperating with the material of the wall of the guide groove (22) of the sliding sleeve (21) with which the support tab (5) is in frictional contact.

16. Gearshift fork (1) according to one of claims 7 to 9, **characterised in that** the gearshift arm is made out of a sheet metal part in a shaping procedure without chip removal.

17. Gearshift fork (1) according to claim 6, **characterised in that** the shaped part is made out of a sheet metal part in a shaping procedure without chip removal.

18. Method of making a gearshift fork (1) for a mechanical transmission according to one of claims 1 to 17 out of a tube (15) as a starting material, said method comprising the following steps:
- filling a hollow space of the tube (15) with an incompressible medium (16),
- widening and shaping the tubular profile,
- bending over the tube (15) provided with the desired profiles to form the gearshift fork (1) and
- emptying the hollow space.

19. Method according to claim 18, **characterised in that** the incompressible medium (16) is paraffin.

20. Method according to claim 18, **characterised in that** the incompressible medium (16) is oil.

21. Method according to claim 18, **characterised in that** the tube (15) is at least partially widened by high-pressure shaping.

22. Method according to claim 18, **characterised in that** the profiles of the tube ends (18) and of the central region of the tube (15) are formed by rolling or roller-burnishing.

## Revendications

1. Fourchette (1) de changement de vitesse pour une boîte de vitesses manuelle, ladite fourchette (1) de changement de vitesse comprenant un corps de base (2) qui, par suite de sa configuration globalement en forme de U, entoure, au moins partiellement, un manchon coulissant, ledit corps de base (2) étant fabriqué à partir d'un corps profilé, **caractérisée en ce que** le corps profilé est configuré sous la forme d'un profil tubulaire autonome.

2. Fourchette (1) de changement de vitesse selon la revendication 1, **caractérisée en ce que** le corps de base (2) en forme de U se raccorde à ses extrémités à des entraîneurs (3).

3. Fourchette (1) de changement de vitesse selon la revendication 2, **caractérisée en ce que** les entraîneurs (3) sont configurés sous la forme de corps profilés en forme d'un profil tubulaire autonome.

4. Fourchette (1) de changement de vitesse selon l'une des revendications 1 à 3, **caractérisée en ce que** les profils sont globalement de forme rectangulaire.

5. Fourchette (1) de changement de vitesse selon l'une des revendications 1 à 4, **caractérisée en ce que** la fourchette (1) de changement de vitesse est reliée à un manchon de guidage (10).

6. Fourchette (1) de changement de vitesse selon la revendication 5, **caractérisée en ce que**, une pièce formée (11) est appliquée entre le manchon de guidage (10) et la fourchette (1) de changement de vitesse.

7. Fourchette (1) de changement de vitesse selon la revendication 1, **caractérisée en ce que**, un bras (13) de changement de vitesse est appliqué à la fourchette (1) de changement de vitesse.

8. Fourchette (1) de changement de vitesse selon la revendication 5, **caractérisée en ce que**, un bras (13) de changement de vitesse est appliqué au manchon de guidage (10).

9. Fourchette (1) de changement de vitesse selon la revendication 6, **caractérisée en ce que**, un bras (13) de changement de vitesse est appliqué à la pièce formée (11).

10. Fourchette (1) de changement de vitesse selon la revendication 5, **caractérisée en ce que**, un palier glissant est inséré dans le manchon de guidage (10).

11. Fourchette (1) de changement de vitesse selon la revendication 5, **caractérisée en ce que**, un palier de roulement est inséré dans le manchon de guidage (10).

12. Fourchette (1) de changement de vitesse selon l'une des revendications 2 ou 3, **caractérisée en ce que** les parties des entraîneurs (3) lesquelles s'engagent dans une rainure de guidage (22) du manchon coulissant (21) sont munies d'un revêtement de glissement.

13. Fourchette (1) de changement de vitesse selon la revendication 1, **caractérisée en ce que**, un talon de support (5) est appliqué au corps de base (2) et ce talon de support (5) s'engage dans la rainure de guidage (22) du manchon coulissant (21).

14. Fourchette (1) de changement de vitesse selon la revendication 13, **caractérisée en ce que** le talon de support (5) est fait en tôle en étant muni d'un revêtement de glissement.

15. Fourchette (1) de changement de vitesse selon la revendication 13, **caractérisée en ce que** le talon de support (5) est fait en un matériau qui, lors d'une coopération avec le matériau de la paroi de la rainure de guidage (22) du manchon coulissant (21) avec lequel le talon de support (5) est en contact frottant, a un coefficient de friction bas.

16. Fourchette (1) de changement de vitesse selon l'une des revendications 7 à 9, **caractérisée en ce que** le bras de changement de vitesse est fabriqué par un procédé de formage sans enlèvement de copeaux à partir d'une pièce en tôle.

17. Fourchette (1) de changement de vitesse selon la revendication 6, **caractérisée en ce que** la pièce formée est fabriquée par un procédé de formage sans enlèvement de copeaux à partir d'une pièce eh tôle.

18. Méthode de fabriquer une fourchette (1) de changement de vitesse pour une boîte de changement de vitesse manuelle selon l'une des revendications 1 à 17, à partir d'un tuyau (15) en tant que matériau de départ, par les étapes suivantes ;
- remplissage d'une cavité du tuyau (15) avec un milieu incompressible (16),
- élargissement et formage du profil tubulaire,
- cintrage du tuyau (15) muni des profils voulus pour former la fourchette (1) de changement de vitesse, et
- vidage de la cavité.

19. Méthode selon la revendication 18, **caractérisée en ce que** le milieu incompressible (16) est de la paraffine.

20. Méthode selon la revendication 18, **caractérisée en ce que** le milieu incompressible (16) est de l'huile.

21. Méthode selon la revendication 18, **caractérisée en ce que** le tuyau (15) est élargi, au moins partiellement, par formage à haute pression.

22. Méthode selon la revendication 18, **caractérisée en ce que** les profils des extrémités (18) du tuyau et de la région centrale du tuyau (15) sont formés par laminage ou par écrouissage par rouleau.
